# FASCICULE DE BREVET EUROPEEN

(11) **EP 1 836 114 B1**
(45) Date de publication et mention de la délivrance du brevet: **26.05.2010**
(21) Numéro de dépôt: 06710223.6
(22) Date de dépôt: 10.01.2006
(51) Int. Cl.: B65G 17/48, B65G 47/91

(54) **DISPOSITIF POUR TOURNER UN OBJET**
VORRICHTUNG ZUR OBJEKTDREHUNG
DEVICE FOR ROTATING AN OBJECT

(30) Priorité: 14.01.2005 FR 0500384
(43) Date de publication de la demande: 26.09.2007
(73) Titulaire: Sapal S.A ., 1024 Ecublens (CH)
(72) Inventeur: BLATTER, René, CH-1291 Commugny (CH)
(74) Mandataire: Bugnion Genève
(86) Numéro de dépôt international: PCT/IB2006/000025
(87) Numéro de publication internationale: WO 2006/075225

(56) Documents cités:
- DE-A1- 2 062 832
- NL-A- 249 770

## Description

L'invention concerne un dispositif pour tourner un objet, par exemple adapté au retournement à 180 degrés d'une languette plastique dans un procédé de fabrication d'un emballage, selon le préambule de la revendication 1. Un tel dispositif pour tourner un objet est décrit dans le document NL-A-249770.

Dans l'art antérieur, il existe des dispositifs pour réaliser des emballages alimentaires qui comprennent des étapes de transport de films plastiques ou aluminium. Certaines étapes exigent le retournement à 180 degrés des objets transportés. Pour cela, des dispositifs spécifiques mettent en oeuvre cette fonction à l'aide d'au moins un moteur particulier provoquant la rotation selon l'angle recherché.

Un objet de la présente invention consiste à proposer un dispositif plus simple et moins coûteux pour obtenir le pivotement d'un objet.

Le concept de l'invention consiste à ne pas utiliser de dispositif spécifique pour mettre en oeuvre la fonction de rotation, mais de profiter d'un moteur ou moyen remplissant une fonction de transport en combinant la rotation de l'élément avec son déplacement opéré par le moyen de transport à l'aide d'un système de guidage particulier.

Plus précisément, l'invention repose sur un dispositif pour tourner un objet selon la revendication 1.

Selon une implémentation, le chariot est monté mobile en rotation autour d'un axe lié à un bras se déplaçant dans un rail du dispositif de guidage fixe par un moyen de transport de type moteur.

Le chariot peut comprendre deux tiges distinctes de l'axe de rotation et le dispositif de guidage fixe peut comprendre une première rampe annulaire pour guider la première tige et une seconde rampe ayant une partie sensiblement verticale pour guider la seconde tige.

Selon une variante d'implémentation, le dispositif de guidage fixe comprend une seconde rampe de guidage comprenant une première et une troisième partie sensiblement horizontales, sur lesquelles se déplace la seconde tige du chariot lors d'un déplacement proche d'une simple translation et une seconde partie sensiblement verticale dans laquelle se déplace la seconde tige initialement à l'arrière du chariot, cette seconde partie étant entourée d'une rampe annulaire dans laquelle se déplace la première tige initialement à l'avant pour réaliser une boucle arrière et passer derrière la seconde tige en provoquant ainsi la rotation du chariot autour de l'axe.

Les deux rampes peuvent être placées dans deux plans différents du dispositif de guidage et les deux tiges du chariot peuvent avoir une longueur différente pour entrer en contact avec une seule des deux rampes.

Selon une implémentation de l'invention, la première rampe annulaire se trouve à une hauteur supérieure à celle des parties sensiblement horizontales de la seconde rampe de guidage pour éviter que la seconde tige n'entre en contact avec cette première rampe annulaire et les parties sensiblement horizontales de la seconde rampe de guidage présentent une inclinaison au niveau de leur frontière avec la partie centrale sensiblement verticale afin de permettre la mise en contact de la première tige avec la première rampe annulaire à une hauteur supérieure.

Cet objet, caractéristiques et avantages de la présente invention seront exposés en détail dans la description suivante d'un mode d'exécution particulier fait à titre non-limitatif en rotation avec les figures jointes parmi lesquelles :
La figure 1 représente une vue en coupe de côté du dispositif selon un mode d'exécution de l'invention ;
la figure 2 représente une vue de face du dispositif selon le mode d'exécution de l'invention dans une première position ;
la figure 3 représente une vue de face du dispositif selon le mode d'exécution de l'invention dans une seconde position ;
la figure 4 représente une vue de face du dispositif selon le mode d'exécution de l'invention dans une troisième position ;
la figure 5 représente une vue de face du dispositif selon le mode d'exécution de l'invention dans une quatrième position ;
la figure 6 représente une vue de face du dispositif selon le mode d'exécution de l'invention dans une cinquième position.

Le mode d'exécution représenté concerne une application dans le domaine de l'emballage alimentaire pour retourner une languette plastique de petite taille. Cette languette doit être déplacée entre une position initiale, issue de l'opération de découpage du film plastique qui forme un feuillet et cette languette, et une position finale dans laquelle elle peut être collée sur ledit feuillet pour former une languette d'ouverture du futur emballage qui sera formé à partir de ce feuillet. Ce déplacement se compose en général d'une ou plusieurs translations et a pour unique fonction le transport de la languette entre deux ateliers où elle subit une opération particulière. Il est nécessaire dans ce procédé particulier de retourner la languette de 180 degrés entre sa saisie après la première étape de découpage et la seconde étape de collage, sa face inférieure devant être collée sur la face supérieure du feuillet plastique, afin de mettre en contact deux faces enduites de matériau thermosoudable et obtenir leur collage à chaud.

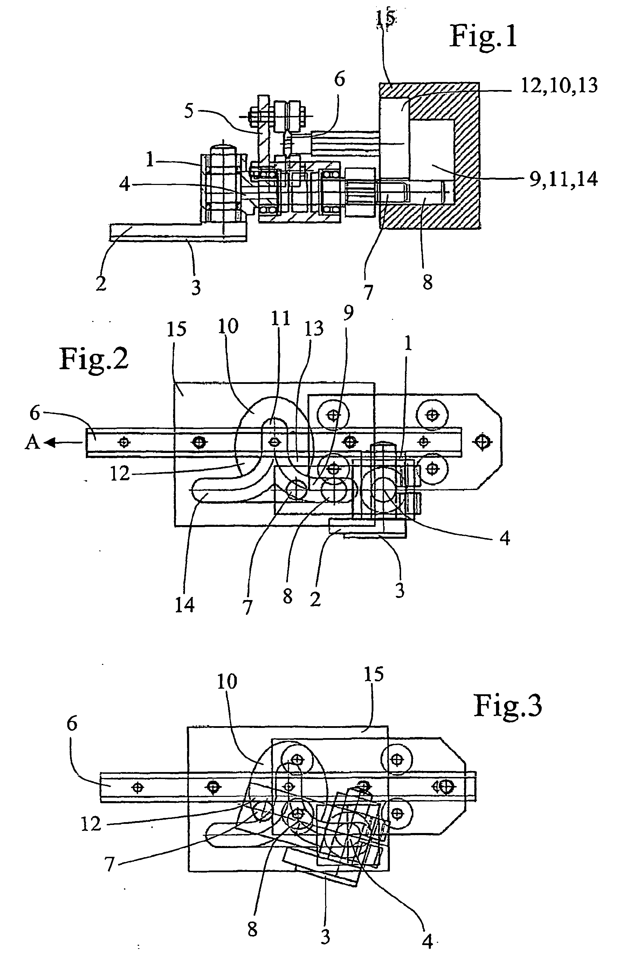

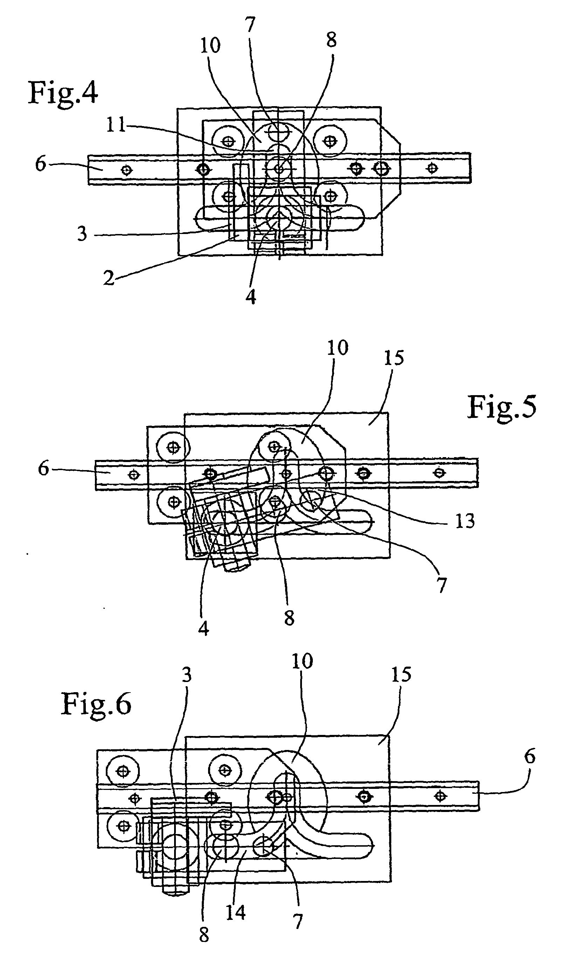

Le dispositif selon un mode d'exécution de l'invention, illustré sur les figures 1 et 2, repose sur un chariot 1 comprenant une ventouse 2, ou en variante un moyen équivalent, comme une pince, pour porter la languette 3 à manipuler. Le chariot 1 est monté mobile en rotation autour d'un axe 4 fixé sur un bras 5 monté sur un rail 6 du dispositif de guidage fixe 15 du dispositif. Le bras 5 est mis en mouvement de translation le long du rail 6, dans le sens de la flèche A, par un moteur non représenté, et entraîne en translation l'axe 4 portant le chariot 1. Le dispositif remplit donc une première fonction de transport de la languette 3 de sa position initiale, illustrée sur la figure 2, vers sa position finale, illustrée sur la figure 6. Le chariot 1 comprend deux tiges 7 et 8 de longueur différente, distinctes de l'axe 4 de rotation du chariot. La première tige 7 est plus courte et destinée à un guidage dans une première rampe annulaire 10, 12, 13 placée dans un premier plan du dispositif de guidage 15 et la seconde tige 8, plus longue, est en contact avec une seconde rampe 9, 11, 14 disposée dans un second plan arrière du dispositif de guidage fixe 15.

La figure 2 illustre la première position du chariot 1 dans la phase initiale du transport de la languette 3, dans laquelle la seconde tige 8 se trouve en contact avec une première partie 9 sensiblement horizontale de la seconde rampe et assure seule le guidage du chariot 1.

La figure 3 illustre une seconde position dans laquelle la première tige 7 entre en contact avec la première partie basse 12 de la rampe annulaire 10 du dispositif, la seconde tige 8 se trouvant dans une partie extrême de la seconde rampe 9. Cette partie extrême présente une légère inclinaison pour permettre à la première tige 7 de se trouver dans une position plus haute et d'entrer en contact avec la rampe annulaire 12 disposée à une hauteur supérieure à celle des parties 9 et 14 de la première rampe, afin d'éviter que la seconde tige 8 n'entre en contact avec cette rampe annulaire 10.

La figure 4 illustre une troisième position du chariot 1 dans laquelle la première tige 7 a été guidée jusqu'au sommet de la première rampe annulaire de guidage 10 pendant que la seconde tige 8 suit une seconde partie 11 sensiblement verticale de la seconde rampe de guidage. Ce guidage des deux tiges 7 et 8 du chariot provoque sa rotation autour de l'axe 4 dans le sens des aiguilles d'une montre. Dans cette quatrième position, la languette 3 a effectué une rotation de 90 degrés.

La figure 5 illustre une quatrième position du chariot 1 pour laquelle la première tige 7 atteint l'extrémité basse 13 de la rampe annulaire de guidage 10, après avoir effectué globalement une boucle arrière. La seconde tige 8 est redescendue dans la partie verticale 11 de la seconde rampe de guidage et pénètre dans une troisième partie 14 sensiblement horizontale de cette même rampe de guidage, à une hauteur inférieure à celle de la partie initiale 12 de la rampe annulaire 10, et va alors assurer seule la continuité du guidage. La première tige 7 quitte alors la première rampe annulaire 10. L'ordre des deux tiges 7 et 8 a été inversé lors de la boucle arrière effectuée par la première boucle 7, entraînant dans le même temps un retournement du chariot 1 autour de son axe de rotation 4.

La figure 6 illustre la position finale du chariot 1, pour lequel la tige 8 se trouvent dans la partie horizontale finale de la partie 14 de la seconde rampe de guidage. Le chariot 1, ainsi que la languette 3 qu'il porte, ont effectué une rotation de 180 degrés.

Le dispositif présente donc l'avantage de réaliser, à l'aide d'un seul moteur de transport ou équivalent, la double fonction d'une part de transport d'un objet et d'autre part de rotation de l'objet. Il permet donc d'atteindre par exemple le retournement de l'objet sans dispositif additionnel, complexe et coûteux, pour mettre en oeuvre spécifiquement cette seconde fonction. La longueur des parties horizontales 9 et 14 de la seconde rampe de guidage peut être augmentée dans le cas d'un transport nécessaire sur une plus grande distance.

Le concept de l'invention peut être utilisé pour toute rotation d'un objet transporté d'une position vers une seconde position.

## Revendications

1. Dispositif pour tourner un objet, comprenant un chariot (1) ayant un moyen (2) pour porter un objet (3), un moyen de transport (4, 5) mobile par rapport à un dispositif de guidage fixe (15) et lié au chariot (1) pour transporter l'objet (3) d'une position initiale vers une position finale, le chariot (1) étant monté mobile en rotation autour d'un axe (4), lié à un bras (5) se déplaçant par rapport au dispositif de guidage fixe (15), du moyen de transport (4, 5), **caractérisé en ce qu'**il comprend des moyens (7, 8) comprenant au moins une tige coopérant avec une rampe annulaire (10) du dispositif de guidage fixe (15) pour provoquer la rotation du chariot (1) lors de son déplacement entre les positions initiale et finale.

2. Dispositif pour tourner un objet selon la revendication 1, **caractérisé en ce que** le chariot (1) est monté mobile en rotation autour d'un axe (4) lié à un bras (5) se déplaçant dans un rail (6) du dispositif de guidage fixe (15) par un moyen de transport de type moteur.

3. Dispositif pour tourner un objet selon la revendication 2, **caractérisé en ce que** le chariot (1) comprend deux tiges (7, 8) distinctes de l'axe (4) et **en ce que** le dispositif de guidage fixe (15) comprend une première rampe annulaire (10) pour guider la première tige (7) et une seconde rampe ayant une partie sensiblement verticale (11) pour guider la seconde tige (8).

4. Dispositif pour tourner un objet selon la revendication 3, **caractérisé en ce que** le dispositif de guidage fixe (15) comprend une seconde rampe de guidage comprenant une première et une troisième partie (9, 14) sensiblement horizontales, sur lesquelles se déplace la seconde tige (8) du chariot (1) lors d'un déplacement proche d'une simple translation et une seconde partie (11) sensiblement verticale dans laquelle se déplace la seconde tige (8) initialement à l'arrière du chariot (1), cette seconde partie (11) étant entourée d'une rampe annulaire (10) dans laquelle se déplace la première tige (7) initialement à l'avant pour réaliser une boucle arrière et passer derrière la seconde tige (8) en provoquant ainsi la rotation du chariot (1) autour de l'axe (4).

5. Dispositif pour tourner un objet selon la revendication 4, **caractérisé en ce que** les deux rampes (10, 12, 13 ; 9, 11, 14) sont placées dans deux plans différents du dispositif de guidage (15) et **en ce que** les deux tiges (7, 8) du chariot ont une longueur différente pour entrer en contact avec une seule des deux rampes.

6. Dispositif pour tourner un objet selon la revendication 5, **caractérisé en ce que** la première rampe annulaire (10) se trouve à une hauteur supérieure à celle des parties (9, 14) sensiblement horizontales de la seconde rampe de guidage pour éviter que la seconde tige (8) n'entre en contact avec cette première rampe annulaire (10) et **en ce que** les parties (9, 14) sensiblement horizontales de la seconde rampe de guidage présentent une inclinaison au niveau de leur frontière avec la partie centrale sensiblement verticale (11) afin de permettre la mise en contact de la première tige (7) avec la première rampe annulaire (10) à une hauteur supérieure.

## Claims

1. Device for rotating an object, comprising a carriage (1) containing a means (2) for supporting an object (3), a transporting means (4, 5) that is movable with respect to a fixed guiding device (15) and connected to the carriage (1) for transporting the object (3) from an initial position to a final position, said carriage being disposed to be free for rotational movement about an axle (4) of the transporting means (4, 5) which is connected to an arm (5) movable with respect to the fixed guiding device (15), **characterised in that** it comprises means (7, 8) containing at least one stem coacting with an annular slideway (10) of the fixed guiding device (15) for effecting the rotation of the carriage (1) during its displacement between the initial and the final positions.

2. Device for rotating an object according to claim 1, **characterised in that** the carriage (1) is mounted rotatably about an axle (4) connected to an arm (5) that is displaceable by a motorised transportation means within a rail (6) of the fixed guiding device (15).

3. Device for rotating an object according to claim 2, **characterised in that** the carriage (1) comprises two stems (7, 8) separated from the axle (4), and **in that** the fixed guiding device (15) comprises a first annular slideway (10) for guiding the first stem (7) and a second slideway comprising an approximately vertical portion (11) for guiding the second stem (8).

4. Device for rotating an object according to claim 3, **characterised in that** the fixed guiding device (15) comprises a second guiding slideway composed of a first and a third approximately horizontal portions (9, 14) on which the second stem (8) of the carriage (1) is moving during a displacement according to about a simple translation, and of a second, approximately vertical portion (11) in which the second stem (8) that is initially situated at the rear of the carriage (1) is moving, this second portion (11) being surrounded by an annular slideway (10) in which the first stem (7) that is initially situated at the front is moving, such as to realise a backward loop and to pass behind the second stem (8), thus effecting the rotation of the carriage (1) around the axle (4).

5. Device for rotating an object according to claim 4, **characterised in that** the two slideways (10, 12, 13; 9, 11, 14) are placed in two different planes of the guiding device (15), and **in that** the two stems (7, 8) of the carriage have different lengths for coming into contact with only one of the slideways.

6. Device for rotating an object according to claim 5, **characterised in that** the first annular slideway (10) is disposed at a height exceeding that of the approximately horizontal portions (9, 14) of the second guiding slideway in order to avoid that the second stem (8) comes into contact with that first annular slideway (10), and **in that** the approximately horizontal portions (9, 14) of the second guiding slideway are inclined at the level of their borderline with the central, approximately vertical portion (11) such as to allow the contact of the first stem (7) with the first annular slideway (10) at a superior height.

## Patentansprüche

1. Vorrichtung zur Drehung eines Objekts, mit einem Wagen (1), der ein Mittel (2) zur Aufnahme eines Objekts (3) und ein in Bezug auf eine feste Führungsvorrichtung (15) bewegliches und mit dem Wagen (1) verbundenes Transportmittel (4, 5) zum Transport des Objekts (3) von einer Ausgangsposition zu einer Endposition aufweist, wobei der Wagen um eine an einem Arm (5) angebrachte Achse (4) des Transportmittels (4, 5) drehbar angeordnet ist und der Arm gegenüber der festen Führungsvorrichtung (15) verschiebbar ist, **dadurch gekennzeichnet, dass** die Vorrichtung Mittel (7, 8) aufweist, welche mindestens einen Bolzen enthalten, der mit einer Ringbahn (10) der festen Führungsvorrichtung (15) zusammenwirkt, um die Drehung des Wagens (1) während seiner Verschiebung zwischen der Ausgangsposition und der Endposition zu bewirken.

2. Vorrichtung zur Drehung eines Objekts nach Anspruch 1, **dadurch gekennzeichnet, dass** der Wagen (1) drehbeweglich um eine Achse (4) angeordnet ist, welche mit einem Arm (5) verbunden ist, welcher in einer Schiene (6) der festen Führungsvorrichtung (15) verschiebbar ist, veranlasst durch ein motorisches Transportmittel.

3. Vorrichtung zur Drehung eines Objekts nach Anspruch 2, **dadurch gekennzeichnet, dass** am Wagen (1) zwei Bolzen (7, 8) getrennt von der Achse (4) angebracht sind, und dass die feste Führungsvorrichtung (15) eine erste Ringbahn (10) zur Führung des ersten Bolzens (7) und eine zweite Bahn mit einem praktisch vertikalen Bereich (11) zur Führung des zweiten Bolzens (8) aufweist.

4. Vorrichtung zur Drehung eines Objekts nach Anspruch 3, **dadurch gekennzeichnet, dass** die feste Führungsvorrichtung (15) eine zweite Führungsbahn mit einem ersten und einem dritten Bereich (9, 14), die praktisch horizontal liegen und in welchen der zweite Bolzen (8) des Wagens (1) bei einer nahezu linearen Verschiebung läuft, und mit einem zweiten, praktisch vertikalen Bereich (11) aufweist, in welchem der zweite Bolzen (8) läuft, der zunächst im Wagen (1) hinten liegt, wobei dieser zweite Bereich (11) von einer ringförmigen Bahn (10) umgeben ist, in welchem der erste Bolzen (7) läuft, der zunächst im Wagen vorn liegt und eine Schleife nach hinten ausführt und dabei hinter den zweiten Bolzen (8) gelangt, wodurch die Drehung des Wagens (1) um die Achse (4) bewirkt wird.

5. Vorrichtung zur Drehung eines Objekts nach Anspruch 4, **dadurch gekennzeichnet, dass** die zwei Bahnen (10, 12, 13; 9, 11, 14) in zwei verschiedenen Ebenen der Führungsvorrichtung (15) liegen, und dass die beiden Bolzen (7, 8) des Wagens unterschiedlich lang sind, damit sie in nur eine der beiden Bahnen einlaufen können.

6. Vorrichtung zur Drehung eines Objekts nach Anspruch 5, **dadurch gekennzeichnet, dass** sich die erste ringförmige Bahn (10) in einer Höhe befindet, die über derjenigen der beiden praktisch horizontalen Bereiche (9, 14) der zweiten Führungsbahn liegt, um zu vermeiden, dass der zweite Bolzen (8) in die genannte erste ringförmige Bahn (10) einläuft, und dass die beiden praktisch horizontalen Bereiche (9, 14) der zweiten Führungsbahn an ihrer Grenze zum praktisch senkrecht stehenden mittleren Bereich (11) geneigt sind, um die Herstellung der Berührung des ersten Bolzens (7) mit der ersten ringförmigen Bahn (10) in einer grösseren Höhe zu ermöglichen.
